(19) Europäisches Patentamt
European Patent Office
Office européen des brevets

(11) Veröffentlichungsnummer : **0 287 589 B1**

# (12) EUROPÄISCHE PATENTSCHRIFT

(45) Veröffentlichungstag der Patentschrift :
**22.04.92 Patentblatt 92/17**

(51) Int. Cl.$^5$ : **C09D 7/00**, C09D 5/04

(21) Anmeldenummer : **87906395.6**

(22) Anmeldetag : **01.10.87**

(86) Internationale Anmeldenummer :
**PCT/DE87/00450**

(87) Internationale Veröffentlichungsnummer :
**WO 88/02389 07.04.88 Gazette 88/08**

## (54) VERDICKUNGSMITTEL FÜR THIXOTROPE BESCHICHTUNGSMASSEN.

(30) Priorität : **03.10.86 DE 3634183**
**10.02.87 DE 3704084**
**27.07.87 DE 3724824**

(43) Veröffentlichungstag der Anmeldung :
**26.10.88 Patentblatt 88/43**

(45) Bekanntmachung des Hinweises auf die Patenterteilung :
**22.04.92 Patentblatt 92/17**

(84) Benannte Vertragsstaaten :
**AT BE CH DE FR GB IT LI LU NL SE**

(56) Entgegenhaltungen :
**EP-A- 0 144 135**
**FR-A- 2 157 814**
**FR-A- 2 212 405**
**US-A- 3 438 915**

(73) Patentinhaber : **Hüttenes-Albertus Chemische-Werke GmbH**
**Wiesenstrasse 23-64**
**W-4000 Düsseldorf-Heerdt 11 (DE)**

(72) Erfinder : **VAN SANDE, Jan**
**Rheinstrasse 180**
**W-4060 Viersen 12 (DE)**

(74) Vertreter : **Eikenberg, Kurt-Rudolf**
**Patenanwalt Schackstrasse 1**
**W-3000 Hannover 1 (DE)**

**EP 0 287 589 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Seit einiger Zeit erfreuen sich thixotrope Anstrichstoffe einer steigenden Beliebtheit. Diese Anstrichstoffe weisen eine gelartige Struktur auf, die unter der Wirkung der beim Auftragen erzeugten Scherkräfte zusammenbricht und sich anschließend im Ruhezustand wieder einstellt. Im Vergleich zu nicht-thixotropen Anstrichstoffen wird dadurch das Tropfen verringert oder sogar ausgeschaltet, es entstehen Anstriche ohne Gardinenbildung und Ablaufneigung, und außerdem ist auch eine größere Schichtstärke der Anstriche möglich. Die gelartige Struktur dieser Anstrichstoffe kann von einem leichten Gel bis zu einem starken Gel reichen und sogar auch so weit gesteigert sein, daß der Anstrichstoff im Ruhezustand eine feste Form annimmt (sog. "Kompaktanstrichstoff").

Eine Gruppe der bekannten thixotropen Anstrichstoffe basiert auf aushärtbaren wäßrigen Bindemittel-Dispersionen, die noch Pigmente, Füllstoffe und übliche Additive (wie Konservierungsmittel, Entschäumer, Trockenstoffe u. dgl.) enthalten können und die zur Erzeugung der Thixotropie-Eigenschaften mit einem Verdickungskolloid sowie einem Chelatkomplex als Strukturbildner versetzt sind. So beschreibt die DE-PS 1 242 306 ein wasserverdünnbares thixotropes überzugsmittel auf der Grundlage eines filmbildenden Homo- oder Copolymerisats von Vinylestern, Acryl- und Methacrylsäureestern, Styrol, Acrylnitril und Butadien, dem ein hydroxylgruppenhaltiges organisches Kolloid in Form von Stärke- oder Zellulosederivaten sowie Titanchelat zugesetzt sind. Weiterhin beschreibt die EP-A 144 135 einen Kompaktanstrichstoff, der sich im wesentlichen aus einer wäßrigen Latexpolymerdispersion, einem Verdickungskolloid vorzugsweise auf Zellulosebasis sowie Tonen, Zirkoniumchelat und/oder Titanchelat als Strukturhilfsmittel zusammensetzt.

Bei einer weiteren Gruppe von bekannten thixotropen Anstrichstoffen auf Dispersionsbasis sind quellfähig aktivierte Schichtsilikate wie Bentonit, Montmorillonit, Illit, Vermiculit und insbesondere Smektit als Verdickungsmittel eingesetzt. Die Schichtsilikate werden dazu in feinteiliger Form unter Einsatz von Scherkräften in dem System dispergiert, wobei sich die einzelnen Schichtplättchen weitgehend bis vollständig voneinander lösen und in dem System eine kolloidale Dispersion oder Suspension bilden, die zu einer Gelstruktur führt. Das Gelgerüst kann dabei durch Zugabe von langkettigen organischen Polyelektrolyten wie Stärkeabbauprodukten, Zellulosederivaten, Pektinen oder Gelatine, die sich an die Schichtplättchen anlagern und ihrerseits ebenfalls eine Gelstruktur aufbauen können, stabilisiert werden.

Mit der Erfindung wird nun ein verbessertes Verdickungsmittel für Beschichtungsmassen vorgeschlagen mit dem Ziel, daß sich ein vorbestimmter thixotroper Zustand innerhalb kurzer Zeit nach der Herstellung der Masse (Größenordnung 1 h und weniger) einstellt und die Viskosität auch nach längerer Lagerung im wesentlichen konstant bleibt, also die Masse somit schon kurz nach der Herstellung gebrauchsfertig ist und dann auch über längere Zeiträume hinweg ihre Eigenschaften kaum mehr ändert.

Dieses Ziel wird erfindungsgemäß dadurch erreicht, daß das Verdickungsmittel ein mit einem aminofunktionellen Silan umgesetztes Hetero-Polysaccharid ist, wobei das Mengenverhältnis von Hetero-Polysaccharid zu Silan im Bereich von 10:1 bis 1:5, vorzugsweise im Bereich 5:1 bis 1:2 liegt.

Im Gegensatz zu den Homo-Polysacchariden wie Stärke- und Zellulosederivaten, deren Gerüst nur aus Glucose-Einheiten aufgebaut ist, bestehen die Hetero-Polysaccharide aus unterschiedlichen Monosaccharid-Einheiten und weisen normalerweise ein höheres Molekulargewicht auf, das meistens oberhalb von 2 Millionen liegt, aber auch schon mit 30 - 50 Millionen angegeben worden ist (wobei die Unterschiede dieser Werte vermutlich auf Assoziationsphänomenen beruhen). Sie werden normalerweise durch Fermentation von Kohlehydraten mit bestimmten Bakterien gewonnen. Ein typisches Beispiel eines Hetero-Polysaccharids ist durch die Formel

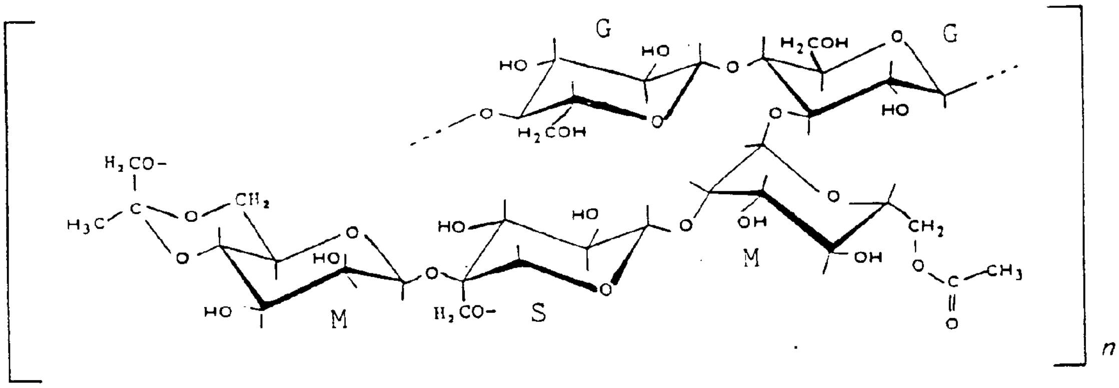

veranschaulicht. Hierbei handelt es sich um eine lineare Hauptkette (Doppel-Helix) aus 1,4-glycosidisch verknüpften Glucose-Einheiten (G) mit Seitenketten aus Mannose-Einheiten (M) und Glucuronsäure-Einheiten (S), wobei letztere gemischt als Kalium-, Natrium- und Calciumsalz vorliegen und bestimmte Mannose-Einheiten noch Carbonylgruppen (Ester) und Acetale enthalten. Diese Hetero-Polysaccharide sind nicht wasserlöslich, sondern quellen in Wasser auf und sind gegen mechanische Kräfte relativ stabil. Ihr pH-Wert liegt bei einem Feststoffgehalt von 1 Gew.-% in Wasser zwischen 6 und 9. Bevorzugt werden sie im wassergequollenen Zustand mit einem Feststoffgehalt von 1 - 3 Gew.-% eingesetzt.

Das zur Umsetzung mit dem Hetero-Polysaccharid eingesetzte aminofunktionelle Silan ist bevorzugt ein Aminoalkyltrialkoxysilan. Hierbei haben sich beispielsweise als gut geeignet erwiesen (einzeln oder in Mischung miteinander)

3-Aminopropyl-triethoxysilan
3-Aminopropyl-methyl-diethoxysilan
3-Ureidopropyl-triethoxysilan
3-Aminopropyl-trimethoxysilan
3-Aminopropyl-tris-(2-methoxy-ethoxy-ethoxy)-silan
N-Aminoethyl-3-aminopropyl-trimethoxysilan
N-Aminoethyl-3-aminopropyl-methyl-dimethoxysilan.

Es ist bereits aus der US-PS 3,438,915 bekannt, Hetero-Polysaccharide der hier definierten Art anstelle von Methylcellulose, Bentonit o. dgl. Mitteln als Verdickungsmittel für insbesondere Acryl-Dispersionen einzusetzen. Demgegenüber beruht der Erfolg der Erfindung auf der Umsetzung des Hetero-Polysaccharids mit dem aminofunktionellen Silan. Diese Umsetzung kann "in situ" erfolgen, indem der Beschichtungsmasse die beiden Reaktionspartner beispielsweise in der Reihenfolge Hetero-Polysaccharid-Silan zugegeben werden, wobei das Hetero-Polysaccharid zweckmäßig 1 - 3%ig in Wasser vorliegt. Ebenso kann die Umsetzung aber auch getrennt erfolgen, also der Beschichtungsmasse ein bereits fertiges Umsetzungsprodukt z.B. in Form einer wäßrigen Paste zugesetzt werden. Die Thixotropie-Eigenschaften der Beschichtungsmasse werden dadurch praktisch nicht beeinflußt, sondern ergeben sich aus dem relativen Mengenverhältnis der beiden Reaktionspartner sowie dem Mengenanteil des Verdickungsmittels in der Beschichtungsmasse, der vorzugsweise im Bereich von 0,1 bis 20 Gew.-% Feststoff liegt, bezogen auf das Gesamtgewicht der Beschichtungsmasse.

Dem Umsetzungsprodukt aus Hetero-Polysaccharid und Silan können noch weitere Zusätze zugegeben sein, welche die rheologische Wirksamkeit des Verdickungsmittels beeinflussen. Auch die Zugabe dieser weiteren Zusätze kann wahlweise "in situ" oder extern erfolgen, indem entweder die einzelnen Reaktionspartner in weitgehend beliebiger Reihenfolge direkt dem zu verdickenden bzw. zu thixotropierenden System zugegeben werden oder indem die Reaktionspartner für sich mit Wasser oder einem anderen geeigneten Lösemittel zu einer Paste verarbeitet werden, die dann dem zu verdickenden bzw. zu thixotropierenden System als bereits fertiges Umsetzungsprodukt zugesetzt wird. Der Einsatz solcher weiterer Zusätze beeinflußt das relative Mengenverhältnis von Hetero-Polysaccharid zu Silan sowie den Mengenanteil des erfindungsgemäßen Verdickungsmittels in der Beschichtungsmasse, wobei sich die für jeden Anwendungsfall günstigsten Werte leicht durch einfache Handversuche ermitteln lassen.

So ist eine Steigerung der rheologischen Wirksamkeit des erfindungsgemäßen Verdickungsmittels durch Zugabe eines primären oder sekundären Amins möglich, das an der Umsetzung teilnimmt. Die Menge an Amin kann bis zu 10 Gew.-% betragen, bezogen auf das Gesamtgewicht der Beschichtungsmasse. Bevorzugt kommen dabei Diamine zum Einsatz, da diese besser zur Ausbildung des Gelzustandes beitragen, außerdem noch katalytisch wirken und eine stärkere Steigerung des Thixotropierungsgrades der Beschichtungsmasse ergeben. Als gut geeignet haben sich beispielsweise erwiesen (wiederum einzeln oder in Mischung miteinander)

Toluylen-2.6-diamin
3,3′-Dimethyl-4,4′-diamino-dicyclohexylmethan
Ethylen-1,2-diamin
Hexamethylen-1,6-diamin
Xylylendiamin
1,3,5-Triisopropylbenzol-2,4-diamin
Isophorondiamin.

Aber auch primäre und sekundäre Monoamine sind wirksam, wie z. B. Butylamin, Cyclohexylamin, Octylamin, Stearylamin, 2-Ethylhexylamin, Dibutylamin und Dicyclohexylamin. Außerdem können Alkoholamine mit gleicher Kohlenstoffzahl wie die entsprechenden Amine eingesetzt werden.

Auch durch Zugabe von quellfähig aktivierten Schichtsilikaten der eingangs beschriebenen Art in einer Menge bis zu 25 Gew.-%, bezogen auf das Gesamtgewicht der Beschichtungsmasse, läßt sich eine Steigerung der rheologischen Wirksamkeit des Umsetzungsproduktes aus Hetero-Polysaccharid und Silan sowie ggfs. Amin erreichen.

Das erfindungsgemäße Verdickungsmittel kann weiterhin noch mit einem Chelatkomplex in einer Menge bis zu 10 Gew.-%, bezogen auf das Gesamtgewicht der Beschichtungsmasse, zur Umsetzung gebracht sein, was zu einer nochmaligen Steigerung der rheologischen Wirksamkeit führt. Zweckmäßigerweise, aber nicht notwendigerweise wird der Chelatkomplex dabei nachträglich zugegeben, weil dies die Möglichkeit einer Interaktion mit dem Reaktionsprodukt aus Polysaccharid-(Schichtsilikat-Amin)-Silan schafft. Natürlich hat das zur Voraussetzung, daß das Reaktionsprodukt noch aktive, zur Interaktion mit dem Chelatkomplex fähige Gruppen enthält.

Als Chelatkomplex kommen bevorzugt Titanchelate zum Einsatz, es zeigen aber auch gewisse Zirkoniumchelate wie Kalium-Zirkonium-Carbonat sowie Mischungen von Titanchelaten und Zirkoniumchelaten die gleiche Wirkung. Die Titanchelate sind komplexe Verbindungen der Titansäure, bei denen wenigstens ein Teil der Wasserstoffatome der Titansäure mit organischen Resten, die noch koordinative Bindungen zum Titanatom eingehen können, verknüpft ist. In wäßrigen Lösungen reagieren sie zum sogenannten dimeren Alkyltitanat. Es kann sich dabei um Titansäureester handeln, die zwei Alkoxy- und zwei Aminoalkoxygruppen oder sogar drei oder vier Aminoalkoxygruppen je Titanatom haben. Auch können Titankomplexe von 2-Hydroxysäuren und deren Salze eingesetzt werden sowie Chelate aus β-Diketonen und β-Ketonsäureestern, die durch Alkoholyse in der Enolform mit niederen Alkylestern der Orthotitansäure reagieren können. Die Titanchelate sind schwer oder nicht hydrolysierbar. Sie enthalten zwischen 3 - 10 % Ti und liegen handels üblich meistens in Lösungen vor. Als gut geeignet haben sich die unter dem geschützten Handelsnamen "Tilcom" erhältlichen Titanchelat-Typen erwiesen.

Der der Erfindung zugrunde liegende Reaktionsmechanismus ist noch ungeklärt und wegen der mannigfachen Reaktionsmöglichkeiten der eingesetzten Substanzen auch kaum präzise zu bestimmen. Bei der Reihenfolge Polysaccharid-Amin-Silan der Reaktionspartner kann eine der Möglichkeiten darin bestehen, daß die Carbonylgruppen des im wäßrigen System vorgelegten Polysaccharids mit dem Amin bzw. Diamin zu einem makromolekularen Polyamid reagieren und daß dann die verbleibenden OH-Gruppen des Polysaccharids (nachfolgend als R-OH bezeichnet, wobei R für den Rest des Polysaccharid-Moleküls steht) durch das Silan etwa in der Art

$$R - OH \longrightarrow R - O - \overset{|}{\underset{|}{Si}} - (CH_2)_3 - NH_2$$

umgesetzt werden, also letztlich anstelle der OH-Gruppen freie (aktive) $NH_2$-Gruppen entstehen und das Polysaccharid keine freien OH-Gruppen mehr enthält. Da die bevorzugten Silane trialkoxyfunktionell sind, können sie auf diese Weise zu einer erhöhten Vernetzung des Polysaccharids beitragen. Auch die bevorzugten Diamine können die Vernetzung erhöhen, sie können aber auch z. B. mit nur einer Aminogruppe reagieren und dann Amidoamine ergeben, also zu zusätzlichen $NH_2$-Gruppen führen.

Im Falle der zusätzlichen Zugabe eines Schichtsilikats kann davon ausgegangen werden, daß in Gegenwart von Wasser oder einem anderen geeigneten Lösemittel zunächst durch Austausch der Zwischenschicht-Kationen eine interkristalline Quellung des Schichtsilikats erfolgt. Auch können sich bei höherem pH-Wert am Rande der Schichtplättchen negative Ladungen bilden, die ihrerseits austauschfähige Kationen halten können. Unter der Einwirkung von Scherkräften können sich die einzelnen Schichtplättchen dann voneinander lösen, wobei die ursprünglichen Zwischenschicht-Kationen wahrscheinlich diffuse Ionenschichten um die Schichtplättchen herum bilden und die sich abstoßenden elektrischen Ladungen zwischen den Ionenschichten das Gemisch stabilisieren. Eine wesentliche weitere Stabilisierung erfolgt dann durch das Polysaccharid, das sich an die Schichtplättchen anlagert.

Wenn die Reihenfolge der Zugabe der vorgenannten Reaktionspartner geändert wird, können Variationen dieses Reaktionsmechanismus auftreten, aber die Thixotropie-Eigenschaften werden dadurch praktisch nicht beeinflußt, so daß es auf die Reihenfolge der Zugabe der Reaktionspartner ebenso wenig ankommt wie darauf, ob die Umsetzung in situ erfolgt oder nicht.

Im Falle der Zugabe eines Chelatkomplexes als letzter Reaktionspartner ist anzunehmen, daß das umgesetzte Polysaccharid, das auch als "Polyamino-Polysaccharid" bezeichnet werden kann, über aktive $NH_2$-, NH- oder verbliebene OH-Gruppen mit dem Chelatkomplex zur räumlichen Interaktion gebracht wird und daß auch an den aktiven Kanten der ggfs. eingesetzten Schichtsilikate Interaktionen entstehen. Da dies mit großer interaktionsgeschwindigkeit erfolgt, entsteht verhältnismäßig rasch ein hochgradig vernetztes gelartiges Makromolekül, dessen Interaktions-Bindungen unter dem Einfluß von Scherkräften aufbrechen und sich nach Beendigung der Scherwirkung mit einer gewissen, durchaus erwünschten zeitlichen Verzögerung wieder reversibel zurückbilden.

Die rheologische Wirksamkeit des erfindungsgemäßen Verdickungsmittels und der erreichte Thixotropierungsgrad läßt sich durch Auswahl bestimmter Reaktionspartner und ihrer relativen Mengenverhältnisse gezielt entsprechend dem jeweiligen Bedarf von "leicht thixotrop" über die Stufen "thixotrop" und "stark thixotrop" bis zum Kompaktzustand oder Festzustand steuern. Ein besonders für den Kompaktzustand wichtiger Vorteil ist es dabei noch, daß das hochgradig vernetzte Makromolekül keine Neigung zur Synärese (Austreten des Wassers aus dem Gel, ohne daß dessen Struktur zusammenbricht) zeigt.

Das Einsatzgebiet des erfindungsgemäßen Verdickungsmittels ist nicht begrenzt, ein Einsatz ist überall dort möglich, wo Verdickungsmittel üblich sind oder zweckmäßig sein können. Demgemäß ist das Bindemittel im Rahmen der Erfindung beliebig, sofern es wasserverträglich ist.

Generell gibt es für die Bindemittel von wäßrigen, wasserverschneidbaren oder wasserverdünnbaren Beschichtungsmassen die folgenden drei Systeme (die als Klarlacksysteme oder als pigmentierte oder mit Farbmitteln versetzte Systeme ausgebildet sein können):

A.) Dispersionen, die in Wasser durch Polymerisation von vinylogen Monomeren wie (Meth-)acrylaten, Vinylacetat, Styrol usw. mittels geeigneter Peroxide, Emulgatoren und Schutzkolloiden erhalten worden sind.

B.) Wasserlösliche Alkydharze, d.h. Kondensationsprodukte aus Säuren und Alkoholen (einschließlich deren Ölmodifikaten) mit freien Carboxylgruppen, die zu einem Ammoniumsalz umgesetzt sind.

C.) Emulsionen vom Typ Öl/Wasser oder Wasser/Öl mit Bindemitteln auf der Basis von natürlichen Ölen oder synthetischen Triglyceriden, trocknend oder nicht-trocknend, auf der Basis von Ölmodifizierten Alkydharzen, die lang-, mittel- oder kurzölig und ggfs. zusätzlich z.B. vinyl-, acryl-, epoxid- und/oder urethanmodifiziert sein können, oder auf der Basis von ungesättigten reaktiven (Prä-)Polymeren wie z.B. urethan-modifizierten Acrylatharzen, Epoxyacrylharzen, ungesättigten Polyesterharzen, Polyesteracrylaten u. dgl., die mittels Elektronenstrahlung, UV-Strahlung, Mikrowellen oder Startern ausgehärtet werden können.

Diese Systeme haben ihre spezifischen Vorteile und Nachteile. So ist bei den Dispersionen die starke Wasserquellbarkeit der hieraus hergestellten Beschichtungsfilme zu vermerken sowie die mangelnde Haftung auf schwierigen (glatten) Substraten (da die Haftung nur mechanisch gesteuert wird) und die rein physikalische Trocknung des Beschichtungsfilmes. Eine chemische Vernetzung bei der Filmbildung ist meistens nur mit Zwei-Komponentensystemen möglich. Bei den wasserlöslichen Alkydharzen ist - vor allem in lufttrocknenden Systemen - nur eine beschränkte Lagerstabilität gegeben, bedingt durch den Angriff der Alkalien an der Esterbindung. Hierdurch wird das Bindemittel auf lange Sicht verseift, was zu einer Phasentrennung der Beschichtungsmasse in nicht appliziertem Zustand, d.h. bei Lagerung und zu einem Viskositätsabfall führt. Außerdem lassen sich damit helle Beschichtungsmassen kaum herstellen, da durch die mitverwendeten Alkalien eine Verfärbung der Trockenstoffe auftritt. Vor allem ist der Einsatz von Cobaltsiccativen erschwert, da diese ihre Metallwertigkeit sehr schnell ändern können und dann eine Schwarz-, Grün- oder Braunfärbung zeigen. Emulsionen schließlich sind im allgemeinen nur schwer herstellbar und benötigen der Stabilität wegen eine bestimmte Teilchengröße, weil sie sonst auseinanderfallen und es zur Phasentrennung kommt. Außerdem ist es bislang noch nicht möglich gewesen, Emulsionen gezielt zu thixotropieren oder daraus gar eine "Kompaktfarbe" (d.h. eine Beschichtungsmasse mit so starker Gelstruktur, daß sie im Ruhezustand eine feste Form annimmt) herzustellen.

Das erfindungsgemäße Verdickungsmittel ist für alle drei Systeme gleichermaßen gut verwendbar, kommt aber im Falle der Emulsionen einem besonderen Bedarf entgegen. Mit der Erfindung gelingt es nämlich, eine wasserhaltige Emulsion zu schaffen, die leichter herstellbar ist, eine erhöhte Stabilität unabhängig von der Teilchengröße aufweist, keine zur Verfärbungsgefahr führenden Alkalien enthält und außerdem erstmals mit einer von "schwach" über "mittel" und "stark" bis zum Kompaktzustand reichenden Thixotropie versehen werden kann. Der Emulsion können bei Bedarf auch noch vinyloge Polymerisate und deren Dispersionen bzw. Emulsionen zugesetzt sein. Das Mischungsverhältnis der verschiedenen Bindemittel ist für die Erfindung unwesentlich.

Die Herstellung der Emulsion erfolgt generell in Anwesenheit geeigneter Emulgatoren, die anionisch, kationisch oder nicht-ionogen sein können und die üblicherweise in Mengen von 0,1 bis 10 Gew.%, bezogen auf das Feststoffgewicht des Bindemittels, zum Einsatz kommen. Art und Menge dieser Emulgatoren haben für die Erfindung keine Bedeutung.

Der Wassergehalt der Emulsion kann im Bereich von 0,1 bis 90 Gew.-% liegen (Öl/Wasser oder Wasser/Öl), bezogen auf das Gesamtgewicht der Emulsion, und außerdem kann die Emulsion auch noch Lösemittel enthalten. Lezteres ist für thixotrope Massen ein ganz neuartiger Aspekt, der wichtige weitere Vorteile der Erfindung zur Folge hat. So ist es beispielsweise ohne Probleme möglich, Beschichtungsmassen auf wäßriger Basis mit einem Lösemittelgehalt unter 10 % herzustellen, wie dies aus Umweltschutzgründen bei lufttrocknenden Beschichtungsmassen in zunehmendem Maße gefordert wird.

Im übrigen ist die Erfindung nicht auf Anstrichstoffe beschränkt, sondern auch bei anderen Beschichtungsmassen wie z. B. Putzen und Ausbesserungsmassen anwendbar, und demgemäß kann das Bindemittel-System auch ein wäßriges anorganisches System z. B. auf der Basis von Zement, Kalk oder Gips (ggfs. im Verein mit einem Kunststoffbinder) sein.

Die nachfolgenden Beispiele sollen die Erfindung näher erläutern und deren Variationsbreite sowohl hinsichtlich der Bindemittel-Systeme als auch hinsichtlich der Thixotropie-Eigenschaften veranschaulichen. Sofern nicht anders vermerkt, sind die Mengenangaben dabei Gewichtsteile (GT).

**Beispiel 1:**

Dieses Beispiel beschreibt einen thixotropen Klarlack auf Basis eines wasserverdünnbaren Acrylharzes.

| Rezeptur | 1a | 1b | 1c |
|---|---|---|---|
| 1.) Acrylharz 30%ig | 48 | 32,46 | 31,25 |
| 2.) Hetero-Polysaccharid, 2-%ig in Wasser | 48 (0,96)* | 64,93 (1,29)* | 62,50 (1,25)* |
| 3.) Xylylendiamin (70 % m, 30 % p) | 0,99 | 0,66 | 1,25 |
| 4.) 3-Aminopropyltriethoxysilan | 0,99 | 0,66 | 1,25 |
| 5.) Titanchelat | 1,92 | 1,29 | 3,75 |
| Effekt | Thixotrop | Thixotrop | Kompakt-Thixotrop "Fester Klarlack" |

* Die eingeklammerte Zahl gibt die Feststoffmenge des Hetero-Polysaccharids in GT an.

Das Acrylharz wurde aus Butylacrylat, 2-Ethylhexylacrylat, Acrylsäure, Hydroxyethylmethacrylat und einem üblichen Peroxidstarter nach dem Lösungsmittelpolymerisationsverfahren in einem aromatenreichen Benzin hergestellt. Nach Erreichen eines Feststoffgehaltes von 50 % wurde mit Triethylamin auf pH 8,5 eingestellt und mit Wasser verdünnt. Eingesetzt wurde eine Harzlösung mit 30 Gew.% Feststoffgehalt in einem Gemisch aus 30 GT des Benzins und 40 GT Wasser. Diese Lösung war vollständig mit Wasser verdünnbar und bildete luftgetrocknet einen geschlossenen Lackfilm. Sie besaß Newtonsches Fließverhalten und hatte eine Viskosität von 350 s/20°C/4 nach DIN 53 211.

Der Harzlösung wurde zunächst das wassergequollene Hetero-Polysaccharid zugesetzt und fein verteilt, wobei sich die Viskosität erhöhte. Die anschließende Zugabe (in der Reihenfolge) des Xylylendiamins, des Aminosilans und des Titanchelats führten je nach den Mengenverhältnissen, die im einzelnen in den obigen Rezepturen **1a**, **1b** und **1c** angegeben sind, zu einer schwachen bzw. sehr starken bzw. einer kompakten Thixotropie. Die Zugabe von allein Titanchelat (ohne die Positionen 2, 3 und 4) zur Harzlösung ergab weder eine Viskositätserhöhung noch Thixotropie-Eigenschaften.

**Beispiel 2:**

Dieses Beispiel beschreibt einen pigmentierten thixotropen Anstrichstoff, seidenglänzend, der für Innen- und Außenanwendungen geeignet ist.

Rezeptur

| | | |
|---|---|---|
| 1.) | Styrol/Acrylatdispersion, kolloidfrei 50-%ig in Wasser, mit Emulgatoren stabilisiert | 37,93 |
| 2.) | Hetero-Polysaccharid, 2-%ig in Wasser | 40,65 |
| 3.) | Pigmentpasta, bestehend aus<br>18,0 Wasser<br>0,9 Entschäumer<br>0,8 Konservierungsmittel<br>0,3 Calgon N<br>10,0 1.2-Propandiol<br>70,0 Titandioxid,<br>mit wäßriger Ammoniaklösung auf pH 7,5 - 8 eingestellt | 19,00 |
| 4.) | Xylylendiamin | 0,40 |
| 5.) | 3-Aminopropyl-triethoxysilan | 0,40 |
| 6.) | Titanchelat | 1,62 |

In die vorgelegte Dispersion 1 wurde die Position 2 unter Rühren eingegeben und fein verteilt. Danach wurde das Pigment 3 zugesetzt und ebenfalls fein verteilt. Anschließend wurde das Gemisch aus Position 1 + 2 + 3 unter Rühren mit Position 4 und danach mit Position 5 versetzt. Nach gutem Durchrühren des Gesamtgemisches wurde schließlich Position 6 zugegeben. Es trat innerhalb weniger Minuten eine starke Viskositätserhöhung auf, bis sich nach ca. 30 Minuten ein kompaktes Gel ausbildete. Der Anstrichstoff war danach gebrauchsfertig und ließ sich mit den üblichen Geräten auf einen Untergrund auftragen.

**Beispiel 3:**

Dieses Beispiel beschreibt ebenfalls einen pigmentierten thixotropen Anstrichstoff, seidenglänzend, für Innen- und Außenanwendungen.

Rezeptur

| | | |
|---|---|---|
| 1.) | Styrol/Acrylatdispersion gemäß Beispiel 2 | 37,62 |
| 2.) | Hetero-Polysaccharid, 2-%ig in Wasser | 40,32 |
| 3.) | Pigmentpasta, bestehend aus<br>12,0 Wasser<br>4,7 1.2-Propandiol<br>4,0 Emulgator<br>79,3 Titandioxid | 18,85 |
| 4.) | Xylylendiamin | 0,80 |
| 5.) | 3-Aminopropyl-triethoxysilan | 0,80 |
| 6.) | Titanchelat | 1,61 |

Die Herstellung erfolgte analog Beispiel 2. Es trat wenige Minuten nach Zugabe des Titanchelats eine starke Viskositätserhöhung auf, die sich nach Abschalten des Rührwerkes innerhalb 20 - 30 Minuten zu einer festen Farbe aufbaute. Der Anstrichstoff war danach gebrauchsfertig und ließ sich mit den üblichen Anwendungsgeräten auf einen Untergrund auftragen.

**Beispiel 4**

Dieses Beispiel betrifft einen thixotropen lufttrocknenden, unpigmentierten Anstrichstoff, seidenglänzend.

Rezeptur

| | | |
|---|---|---|
| 1.) | Alkydharz | 46,73 |
| 2.) | Hetero-Polysaccharid, 2-%ig in Wasser | 46,73 |
| 3.) | Sikkativ | 1,68 |
| 4.) | Xylylendiamin | 1,13 |
| 5.) | 3-Aminopropyl-triethoxysilan | 1,49 |
| 6.) | Titanchelat | 2,24 |

Als Bindemittelbasis (Position 1) diente ein ölmodifiziertes, lufttrocknendes Alkydharz mit einem Gehalt von ca. 45 % Öl und ca. 27 % Phthalsäureanhydrid, das in 70-%iger Lösung in Butylglykol vorlag. Die Säurezahl betrug 50 - 60, auf den Feststoff bezogen, und die Viskosität einer 50-%igen Lösung in Butylglykol lag bei 80 - 120 s/20°C nach DIN 53 211. Die Harzlösung wurde mit wäßriger Ammoniaklösung auf pH 8,5 - 9 eingestellt.

Die Position 1 wurde vorgelegt, und dann wurden unter intensivem Rühren die Positionen 2, 3, 4, 5 und 6 nacheinander zugegeben, wobei jede neu zugefügte Position mit den vorherigen gut gemischt wurde. Etwa 10 Minuten nach der Zugabe der letzten Position ergab sich ein thixotroper Klarlack, der sofort gebrauchsfertig war.

**Beispiel 4**

Dieses Beispiel betrifft einen thixotropen lufttrocknenden, unpigmentierten Anstrichstoff, seidenglänzend.

Rezeptur

| | | |
|---|---|---|
| 1.) | Alkydharz | 46,73 |
| 2.) | Hetero-Polysaccharid, 2-%ig in Wasser | 46,73 |
| 3.) | Sikkativ | 1,68 |
| 4.) | Xylylendiamin | 1,13 |
| 5.) | 3-Aminopropyl-triethoxysilan | 1,49 |
| 6.) | Titanchelat | 2,24 |

Als Bindemittelbasis (Position 1) diente ein ölmodifiziertes, lufttrocknendes Alkydharz mit einem Gehalt von ca. 45 % Öl und ca. 27 % Phthalsäureanhydrid, das in 70-%iger Lösung in Butylglykol vorlag. Die Säurezahl betrug 50 - 60, auf den Feststoff bezogen, und die Viskosität einer 50-%igen Lösung in Butylglykol lag bei 80 - 120 s/20°C nach DIN 53 211. Die Harzlösung wurde mit wäßriger Ammoniaklösung auf pH 8,5 - 9 eingestellt.

Die Position 1 wurde vorgelegt, und dann wurden unter intensivem Rühren die Positionen 2, 3, 4, 5 und 6 nacheinander zugegeben, wobei jede neu zugefügte Position mit den vorherigen gut gemischt wurde. Etwa 10 Minuten nach der Zugabe der letzten Position ergab sich ein thixotroper Klarlack, der sofort gebrauchsfertig war.

**Beispiel 5:**

Dieses Beispiel betrifft einen thixotropen luftofentrocknenden, unpigmentierten Anstrichstoff.

Rezeptur

| | | |
|---|---|---|
| 1.) | Alkydharz | 21,02 |
| 2.) | Hetero-Polysaccharid, 2-%ig in Wasser | 62,16 |
| 3.) | 1.2-Propylenglycol | 6,82 |
| 4.) | entionisiertes Wasser | 5,04 |
| 5.) | Sikkativ | 0,90 |
| 6.) | Topfkonservierer | 0,50 |
| 7.) | Xylylendiamin | 0,50 |
| 8.) | 3-Aminopropyl-triethoxysilan | 1,25 |
| 9.) | Titanchelat | 1,81 |

Als Bindemittelbasis diente ein handelsübliches wasserverdünnbares, ölmodifiziertes luft- und ofentrocknendes Alkydharz, das unneutralisiert in einer 70-%igen Lösung in Butylglykol vorlag. Die Lösung wurde vor dem Einsatz in die Rezeptur noch mit wäßriger Ammoniaklösung auf einen pH-Wert -von 8,5 - 9 eingestellt.

Die Position 1 wurde vorgelegt, und dann wurden unter intensivem Rühren die Positionen 2 bis 9 nacheinander zugemischt. Nach Zugabe der letzten Position entstand innerhalb von 15 Minuten ein fester thixotroper Klarlack (Kompaktlack).

**Beispiel 6:**

Dieses Beispiel beschreibt einen thixotropen lufttrocknenden, unpigmentierten Anstrichstoff.

Rezeptur

| | | |
|---|---|---|
| 1.) | Alkydharz gemäß Beispiel 5 | 16,24 |
| 2.) | Styrol/Acrylatdispersion gemäß Beispiel 2 | 16,24 |
| 3.) | Hetero-Polysaccharid, 2-%ig in Wasser | 64,97 |
| 4.) | Konservierungsmittel | 0,37 |
| 5.) | Trockenstoff | 0,19 |
| 6.) | Xylylendiamin | 0,51 |
| 7.) | 3-Aminopropyl-triethoxysilan | 0,58 |
| 8.) | Titanchelat | 0,90 |

Das Bindemittel war in diesem Fall eine Kombination aus dem wasserverdünnbaren, ölmodifizierten Alkydharz gemäß Beispiel 5 und der schutzkolloidfreien Styrol-Acrylatdispersion gemäß Beispiel 2. Die Herstellung erfolgte analog Beispiel 5. Nachdem alle Positionen zugegeben waren, entstand innerhalb 20 Minuten ein fester thixotroper Klarlack (Kompaktlack).

**Beispiel 7:**

Dieses Beispiel beschreibt einen thixotropen lufttrocknenden, pigmentierten Anstrichstoff.

Rezeptur

| | | |
|---|---|---|
| 1.) | Hetero-Polysaccharid, 2-%ig in Wasser | 51,94 |
| 2.) | Xylylendiamin | 0,81 |
| 3.) | 3-Aminopropyl-triethoxysilan | 0,15 |
| 4.) | Entschäumer | 0,01 |
| 5.) | Styrol-Acrylatdispersion gemäß Beispiel 2 | 26,00 |
| 6.) | Konservierungsmittel | 0,26 |
| 7.) | Pigmentpasta, bestehend aus<br>79,3 Titandioxid<br>4,0 Emulgator<br>4,7 1.2-Propylenglycol<br>15,0 Wasser | 18,75 |
| 8.) | Kalium-Zirkonium-Carbonat | 1,82 |
| 9.) | Titanchelat | 0,26 |

In diesem Beispiel wurde das Polyamino-Polysaccharid nicht in situ gebildet, sondern vorfabriziert. Dazu wurde die Position 1 vorgelegt, und dann wurden unter Rühren die Positionen 2 und 3 nacheinander zugegeben. Anschließend wurden nacheinander die Positionen 4, 5, 6 und 7 gemischt und homogen verteilt. Schließlich erfolgte gleichzeitig die Zugabe der Positionen 8 und 9. Es entstand ein fester lufttrocknender Anstrichstoff (Kompaktanstrichstoff).

**Beispiel 8:**

Dieses Beispiel entspricht dem Beispiel 7, betrifft jedoch einen thixotropen lufttrocknenden, unpigmentierten Anstrichstoff.

Rezeptur

| | | |
|---|---|---|
| 1.) | Hetero-Polysaccharid, 2-%ig in Wasser | 64,20 |
| 2.) | 3-Aminopropyl-triethoxysilan | 1,00 |
| 3.) | Entschäumer | 0,06 |
| 4.) | Rein-Acrylatdispersion, kolloidfrei | 32,20 |
| 5.) | Kalium-Zirkonium-Carbonat | 2,54 |

Die Herstellung erfolgte analog Beispiel 7. Es entstand nach kurzer Zeit ein fester thixotroper Klarlack (Kompaktlack).

**Beispiel 9:**

Dieses Beispiel zeigt die Anwendung der Erfindung bei wasserverdünnbarer Beschichtungsmasse wie Zierputz oder Reibeputz auf Basis anorganischer Substanzen mit Kunststoffdispersionsbinder.

Rezeptur

| | | |
|---|---|---|
| 1.) | Hetero-Polysaccharid, 2-%ig in Wasser | 18,20 |
| 2.) | Xylylendiamin | 0,28 |
| 3.) | 3-Aminopropyl-triethoxysilan | 0,30 |
| 4.) | Titandioxid (Rutil) | 4,50 |
| 5.) | Antischaummittel | 0,10 |
| 6.) | Konservierungsmittel | 0,42 |
| 7.) | Durcal 130 (mineralischer Füllstoff) | 52,50 |
| 8.) | Styrol/Acrylatdispersion gemäß Beispiel 2, mit wäßriger Ammoniaklösung auf pH 8 - 8,5 eingestellt | 20,00 |
| 9.) | Titanchelat | 1,00 |

In ein für die Herstellung von Putzmaterialien geeignetes Mischgerät wurden die Positionen 1 - 9 nacheinander eingefüllt und intensiv vermischt. Nach ca. 10 bis 20 Minuten stellte sich die erwartete thixotrope Struktur ein. Das Material ist dann sofort verwendbar oder kann in geeigneten Gebinden gelagert werden.

**Beispiel 10**

Dieses Beispiel beschreibt die nachträgliche Thixotropierung eines handelsüblichen Reibeputzsystems.

Rezeptur

| | | |
|---|---|---|
| 1.) | Handelsübliches Reibeputzsystem, bestehend aus<br>7,2 Propiofan 5 d (BASF)<br>3,2 Mowilith d (Hoechst)<br>6,6 Wasser<br>5,0 Titandioxid<br>3,0 Lithopone RS<br>2,4 Kreide<br>11,9 Quarzsand 1 - 1,5 mm<br>31,8 Quarzsand F 42<br>27,9 Quarzmehl 4<br>1,0 Rostschutzmittel | 100,00 |
| 2.) | Hetero-Polysaccharid, 2-%ig in Wasser | 50,00 |
| 3.) | Xylylendiamin | 0,7 |
| 4.) | 3-Aminopropyl-triethoxysilan | 0,8 |
| 5.) | Titanchelat | 1,2 |

Das fertige Reibeputzsystem (Position 1) wurde nacheinander mit den Positionen 2, 3, 4 und 5 vermischt und erhielt dadurch nach kurzer Zeit eine feste Thixotropie (Kompakt-Thixotropie).

**Beispiel 11**

Dieses Beispiel betrifft einen Anstrichstoff mit Zusatz eines Schichtsilikats.

In 27,5 GT Hetero-Polysaccharid (2%ig in Wasser) wurden 5 GT eines glimmerartigen Schichtsilikats der

Smectitklasse intensiv eingerührt und feinstverteilt. Anschließend wurden 26 GT einer 50%igen kolloidfreien Reinacrylat-Kunststoffdispersion unter Rühren hinzugemischt. Danach wurden in das Gemisch 39,0 GT einer Titandioxidpasta (die hergestellt war durch schnelles Verrühren von 79,3 GT Titandioxid, 4 GT Emulgator, 4,7 GT 1.2-Propylenglykol und 12 GT Wasser) hineingerührt und anschließend nacheinander 0,46 GT Xylylendiamin, 0,46 GT 3-Aminopropyl-triethoxysilan und 0,6 GT Titanchelat unter intensivem Rühren hinzugefügt. Es entstand eine thixotrope Farbe, die sich mit den üblichen Applikationsgeräten auf ein Substrat aufbringen ließ.

## Beispiel 12

Dieses Beispiel betrifft ebenfalls einen Anstrichstoff mit Zusatz eines Schichtsilikats.

Eine unter Rühren vorgefertigte Pasta, bestehend aus 16,0 GT eines glimmerartigen Schichtsilikats der Smectitklasse und 84,0 GT Wasser, wurde im Verhältnis 1:1 mit Hetero-Polysaccharid (2-%ig in Wasser) gemischt. Unter intensivem Rühren wurden dann 30 GT dieses Gemisches mit 30 GT einer kolloidfreien handelsüblichen 50-%igen Styrol-Acrylatdispersion und 39 GT einer Titandioxidpasta vermischt. Anschließend wurden noch 1 GT 3-Aminopropyl-triethoxysilan und 0,6 GT Titanchelat hinzugegeben und fein verteilt. Es ergab sich eine gebrauchsfähige thixotrope Farbe, die mit den üblichen Applikationsgeräten auf ein Substrat aufgebracht werden konnte.

## Beispiel 13

Dieses Beispiel erläutert die Wirkung einzelner Bestandteile und Zusätze des erfindungsgemäßen Verdickungsmittels

20 GT eines glimmerartigen, mit Soda aktivierten Tonminerals wurden mit 80 GT Wasser intensiv gemischt. Das Gemisch wird als Pasta 1 bezeichnet. Weiterhin wurden 20 GT des gleichen Tonminerals mit 1,6 GT Hetero-Polysaccharid und 78,4 GT Wasser intensiv vermischt. Dieses Gemisch wird als Pasta 2 bezeich0net.

Während Pasta 1 als Nullprobe den Stand der Technik angibt, wurde Pasta 2 nach der folgenden Tabelle komplettiert und mit den erfindungsgemäßen Zusätzen zur Interaktion gebracht.

Tabelle

| Probe | 1 | 2 | 3 | 4 | 5 | 6 |
|---|---|---|---|---|---|---|
| Pasta 1 | 100 | - | - | - | - | - |
| Pasta 2 | - | 100 | 100 | 100 | 100 | 100 |
| 3-Aminopropyl-triethoxysilan | - | - | 0,5 | 0,5 | 0,5 | 0,5 |
| Xylylendiamin | - | - | - | 0,5 | 0,5 | 0,5 |
| Titanchelat | - | - | - | - | 0,1 | - |
| Zirkoniumchelat | - | - | - | - | - | 1,0 |

Allgemeine Beurteilung des rheologischen Verhaltens

| | |
|---|---|
| Probe 1: | geschmeidig; thixotrop |
| Probe 2: | höher viskos als 1, jedoch noch geschmeidig; thixotrop |
| Probe 3: | höher viskos als 2, jedoch noch geschmeidig; thixotrop |
| Probe 4: | höher viskos als 3, stark thixotrop |
| Probe 5: | höher viskos als 4, stark thixotrop |
| Probe 6: | höher viskos als 4, stark thixotrop |

Dieses Beispiel belegt, daß jeder der genannten Zusätze zu einer Steigerung der rheologischen Wirksamkeit des Verdikkungsmittels führt.

**Beispiel 14**

Dieses Beispiel erläutert die Wirkung des erfindungsgemäßen Verdickungsmittels bei einer Alkydharzemulsion. Ausgegangen wurde dabei von einem üblichen ölmodifizierten Langölalkydharz mit einer Öllänge von ca. 63 %; 27 % Phthalsäureanhydrid, mit Pentaerythrit verestert. Die Endsäurezahl lag unter 8 und die dynamische Viskosität (50 %ig in Testbenzin) zwischen 50 und 70 Sek. nach DIN 53 211.

Von diesem Alkydharz wurde nach folgender Rezeptur unter schnellem Rühren eine Emulsion hergestellt, die nachfolgend als "Emulsion 14" bezeichnet wird:

| Emulsion 14 | | |
|---|---|---|
| | 57,30 | Alkydharz 100-%ig |
| | 24,50 | Testbenzin |
| | 2,20 | Emulgator |
| | 16,00 | Wasser |

Als Emulgator diente ein ethoxyliertes Nonylphenol (n=100).

Mit der Emulsion 14 wurden sodann folgende Beschichtungsmassen hergestellt und begutachtet:

| | 14a | 14b | 14c |
|---|---|---|---|
| Emulsion 14 | 49,40 | 40,20 | 31,00 |
| Wasser | 39,45 | 8,54 | - |
| Hetero-Polysaccharid, 2-%ig in Wasser | 9,88 | 49,6 | 30,80 |
| Titandioxid-Pasta | - | - | 37,12 |
| Pb-Octoat 24 % | 0,59 | 0,78 | 0,49 |
| Co-Octoat 6 % | 0,39 | 0,59 | 0,37 |
| Antischaummittel | 0,19 | 0,19 | 0,12 |
| 3-Aminopropyl-triethoxysilan | 0,10 | 0,10 | 0,10 |

Bei den Beschichtungsmassen 14a und 14b handelte es sich um Klarlacke, bei der Masse 14c um ein pigmentiertes System. Alle drei Massen hatten eine Trocknungszeit zwischen 1 und 9 Stunden. Die Masse 14a war ganz geringfügig thixotrop, bei den Massen 14b und 14c war die Thixotropie etwas stärker, lag aber auch noch im Bereich "schwach thixotrop".

Im übrigen ist dieses Beispiel besonders geeignet, die erhebliche Verbesserung der Stabilität der Emulsion zu belegen. Die Massen 14a, 14b und 14c blieben über Monate hinweg stabil und zeigten keine Spur einer Phasentrennung, während bei Vergleichsmassen gleicher Zusammensetzung, aber ohne Gehalt an Hetero-Polysaccharid, bereits nach 24 bis 48 h eine irreversible Phasentrennung eintrat.

**Beispiel 15**

Dieses Beispiel erläutert die Wirkung der Zugabe weiterer Zusatzstoffe zur Emulsion 14. Folgende Beschichtungsmassen wurden hergestellt und begutachtet:

| | 15a | 15b | 15c | 15d |
|---|---|---|---|---|
| Emulsion 14 | 49,3 | 49,0 | 39,8 | 39,4 |
| Hetero-Polysaccharid 2-%ig in Wasser | 49,3 | 49,0 | 39,1 | 39,4 |
| Montmorillonit | - | - | 7,97 | 7,8 |
| 1.2-Butandiol | - | - | 3,29 | 2,43 |
| Pb-Octoat 24% | 0,78 | 0,98 | 0,79 | 0,78 |
| Co-Octoat 6% | 0,58 | 0,64 | 0,63 | 0,48 |
| Wasser | - | - | 7,97 | 9,42 |
| Xylylendiamin | 0,39 | - | 0,30 | - |
| 3-Aminopropyl-triethoxysilan | 0,19 | 0,19 | 0,15 | 0,15 |
| Titanchelat | - | 0,19 | - | 0,15 |

Bei den Massen 15a bis 15d handelte es sich um stark thixotrope Beschichtungsmassen vom Typ Klarlack.

**Beispiel 16**

Auch dieses Beispiel erläutert die Wirkung der Zugabe weiterer Zusatzstoffe. Folgende Beschichtungsmassen wurden hergestellt und begutachtet:

| | 16a | 16b |
|---|---|---|
| Emulsion 14 | 27,81 | 25,22 |
| Wasser | 15,42 | 14,22 |
| Hetero-Polysaccharid, 2-%ig in Wasser | 20,0 | 25,40 |
| Montmorillonit | 5,54 | 4,58 |
| Cellulose Typ Tylose C 300 2-%ig in Wasser | 7,7 | - |
| Titanpasta | 22,1 | 28,4 |
| Pb-Octoat 24 % | 0,44 | 0,64 |
| Co-Octoat 6 % | 0,22 | 0,45 |
| Antischaummittel | 0,01 | 0,09 |
| Xylylendiamin | 0,22 | - |
| 3-Aminopropyl-triethoxysilan | 0,10 | 0,45 |
| Chelatkomplex | 0,44 | 0,55 |

Die Massen 16a und 16b waren pigmentierte Beschichtungsmassen mit starker Thixotropie. Bei der Masse 16a wurde dabeineben dem Hetero-Polysaccharid noch ein Cellulose-Derivat als zusätzliches Schutzkolloid eingesetzt.

**Beispiel 17**

Dieses Beispiel beschreibt ein Bindemittelgemisch aus einer Emulsion und einer vinylogen Dispersion. Als Emulsion wurde wiederum die Emulsion 14 gemäß Beispiel 14 eingesetzt und als Dispersion eine handelsübliche Acrylat/Styrol-Copolymer-Dispersion mit einem Festkörpergehalt von ca. 50 %, anionaktiv eingestellt und schutzkolloidfrei. Folgende Beschichtungsmassen wurden hergestellt und begutachtet:

| | 17a | 17b |
|---|---|---|
| Emulsion 14 | 16,18 | 17,00 |
| Acrylat/Styrol-Copolymer Dispersion 50-%ig in Wasser | 32,30 | 33,20 |
| Heteropolysaccharidlösung 2-%ig in Wasser | 24,62 | 15,0 |
| 1.2-Butandiol | 1,60 | - |
| Titanpasta | 24,20 | 34,0 |
| Pb-Octoat 24 % | 0,30 | 0,40 |
| Co-Octoat 6 % | 0,30 | 0,30 |
| 3-Aminopropyl-triethoxysilan | 0,10 | 0,10 |
| Chelatkomplex | 0,40 | - |

Bei diesen beiden Massen handelt es sich um thixotrope pigmentierte Beschichtungsmassen. Die Thixotropie der Masse 17a war dabei stärker als die Thixotropie der Masse 17b.

**Beispiel 18**

Dieses Beispiel betrifft ein UV-härtendes Bindemittel für Holzbeschichtungen. Ausgegangen wurde dabei von einem handelsüblichen Harz vom Typ Urethanacrylat (Isophorondiisocyanat mit 2-Hydroxyethylacrylat addiert), das mit 20 % Trimethylolpropantriacrylat versetzt und noch mit 30 % Butylacetat vermischt war. Aus dieser Harzmischung wurden nach folgender Rezeptur unter kräftigem Rühren folgende Beschichtungsmassen hergestellt

| | 18a | 18b |
|---|---|---|
| Harzmischung | 40,0 | 35,0 |
| Emulgator | 1,0 | 1,0 |
| Hetero-Polysaccharid, 2-%ig in Wasser | 14,0 | 19,0 |
| Wasser | 44,9 | 44,5 |
| 3-Aminopropyl-triethoxysilan | 0,1 | 0,1 |
| Chelatkomplex | - | 0,4 |

Es entstand eine stabile Emulsion, die im Falle der Masse 18a eine leichte und im Falle der Masse 18b eine stabile starke Thixotropie aufwies. Beide Massen ließen sich nach Zusatz von 1 % eines handelsüblichen radikalischen Starters (Benzoinether) mit üblichen UV-Bestrahlungsgeräten auf Substraten wie Holz oder Papier gut aushärten.

**Patentansprüche**

1. Verdickungsmittel für Beschichtungsmassen, die ein mit Wasser verdünnbares oder verträgliches Bindemittel enthalten, <u>dadurch gekennzeichnet,</u> daß das Verdickungsmittel ein mit einem aminofunktionellen Silan umgesetztes Hetero-Polysaccharid ist, wobei das Mengenverhältnis von Hetero-Polysaccharid zu Silan im Bereich von 10:1 bis 1:5, vorzugsweise im Bereich 5:1 bis 1:2 Gewichtsteilen liegt.

2. Verdickungsmittel nach Anspruch 1, <u>dadurch gekennzeichnet,</u> daß das Hetero-Polysaccharid im wassergequollenen Zustand mit einem Feststoffgehalt von 1 - 3 Gew.-% vorliegt.

3. Verdickungsmittel nach Anspruch 1 oder 2, <u>dadurch gekennzeichnet,</u> daß das aminofunktionelle Silan ein Aminoalkyltrialkoxysilan ist.

4. Verdickungsmittel nach einem der Ansprüche 1 bis 3, <u>dadurch gekennzeichnet,</u> daß das Verdickungsmittel der Beschichtungsmasse in einem Mengenanteil von 0,1 - 20 Gew.-% Feststoff, bezogen auf das Gesamtgewicht der Beschichtungsmasse, zugesetzt ist.

5. Verdickungsmittel nach einem der vorhergehenden Ansprüche, <u>dadurch gekennzeichnet,</u> daß dem Verdickungsmittel zusätzlich ein primäres oder sekundäres Amin, bevorzugt ein Diamin zugesetzt ist, wobei die Menge an Amin bis zu 10 Gew.-% beträgt, bezogen auf das Gesamtgewicht der Beschichtungsmasse.

6. Verdickungsmittel nach einem der vorhergehenden Ansprüche, <u>dadurch gekennzeichnet,</u> daß dem Verdickungsmittel zusätzlich ein quellfähig aktiviertes Schichtsilikat, bevorzugt Bentonit, Montmorillonit, Illit, Vermiculit und/oder Smectit, zugesetzt ist, wobei die Menge an Schichtsilikat bis zu 25 Gew.-% beträgt, bezogen auf das Gesamtgewicht der Beschichtungsmasse.

7. Verdickungsmittel nach einem der vorhergehenden Ansprüche, <u>dadurch gekennzeichnet,</u> daß dem Verdickungsmittel zusätzlich ein Chelatkomplex, bevorzugt Titanchelat und/oder Zirkoniumchelat, zugesetzt ist, wobei die Menge an Chelatkomplex bis zu 10 Gew.-% beträgt, bezogen auf das Gesamtgewicht der Beschichtungsmasse.

8. Verdickungsmittel nach einem der Ansprüche 1 bis 7, <u>dadurch gekennzeichnet,</u> daß das Verdickungsmittel als fertiges Umsetzungsprodukt der Beschichtungsmasse zugesetzt ist.

9. Verdickungsmittel nach einem der Ansprüche 1 bis 7, <u>dadurch gekennzeichnet,</u> daß das Verdickungsmittel in situ gebildet ist, indem die einzelnen Reaktionspartner aufeinanderfolgend der Beschichtungsmasse zugegeben sind.

10. Verwendung des Verdickungsmittels nach einem der vorhergehenden Ansprüche zur Thixotropierung

von Beschichtungsmassen, deren Bindemittel eine Kunstharz-Dispersion in Wasser, ein wasserlösliches Kunstharz und/oder eine ggfs. mit einem Lösemittel versetzte Kunstharz-Emulsion vom Typ Öl/Wasser oder Wasser/Öl ist.

## Claims

1. Thickening agent for coating formulations which contain a water-dilutable or compatible binder, characterised in that the thickening agent is a heteropolysaccharide which has been reacted with an aminofunctional silane, the ratio of the amounts of heteropolysaccharide to silane being in the range of 10:1 to 1:5 parts by weight, preferably in the range of 5:1 to 1:2.

2. Thickening agent according to Claim 1, characterised in that the heteropolysaccharide is in the waterswollen state having a solids content of 1 to 3% by weight.

3. Thickening agent according to Claim 1 or 2, characterised in that the aminofunctional silane is an aminoalkyltrialkoxysilane.

4. Thickening agent according to any of Claims 1 to 3, characterised in that the thickening agent of the coating formulation is added in a proportion of 0.1 to 20% by weight of solids, based on the total weight of the coating formulation.

5. Thickening agent according to any of the preceding claims, characterised in that the thickening agent additionally contains a primary or secondary amine, preferably a diamine, the amount of amine being up to 10% by weight, based on the total weight of the coating formulation.

6. Thickening agent according to any of the preceding claims, characterised in that the thickening agent additionally contains an expansible activated layered silicate, preferably bentonite, montmorillonite, illite, vermiculite and/or smectite, the amount of layered silicate being up to 25% by weight, based on the total weight of the coating formulation.

7. Thickening agent according to any of the preceding claims, characterised in that the thickening agent additionally contains a chelate complex, preferably a titanium chelate and/or a zirconium chelate, the amount of the chelate complex being up to 10% by weight, based on the total weight of the coating formulation.

8. Thickening agent according to any of Claims 1 to 7, characterised in that the thickening agent is added to the coating formulation as a previously prepared reaction product.

9. Thickening agent according to any of Claims 1 to 7, characterised in that the thickening agent is formed in situ, the individual co-reactants being added successively to the coating formulation.

10. Use of the thickening agent according to any of the preceding claims for rendering a coating formulation thixotropic, of which the binder is a synthetic resin dispersion in water, a water-soluble synthetic resin and/or a synthetic resin emulsion of the oil/water or water/oil type, optionally treated with a solvent.

## Revendications

1. Epaississant pour mélanges d'enduction qui contient un liant diluable ou compatible avec l'eau, caractérisé en ce que l'épaississant est hétéro-polysaccharide transformé par un silane aminofonctionnel, la proportion entre les quantités de l'hétéro-polysaccharide et du silane étant dans la plage de 10:1 à 1:5 en poids, de préférence dans la plage 5:1 à 1:2.

2. Epaississant suivant la revendication 1, caractérisé en ce que l'hétéro-polysaccharide est présent à l'état trempé d'eau avec une teneur en solide de 1 à 3 % en poids.

3. Epaississant suivant la revendication 1 ou 2, caractérisé en ce que le silane aminofonctionnel est un aminoalkyltrialkoxysilane.

4. Epaississant suivant l'une des revendications 1 à 3, caractérisé en ce que l'épaississant est ajouté au mélange d'enduction en quantité de 0,1 à 20 % en poids de solide par rapport au poids total du mélange d'enduction.

5. Epaississant suivant l'une des revendications précédentes, caractérisé en ce qu'à l'épaississant, est ajoutée une amine primaire ou secondaire, de préférence une diamine, la quantité d'amine se montant jusqu'à 10 % en poids par rapport au poids total du mélange d'enduction.

6. Epaississant suivant l'une des revendications précédentes, caractérisé en ce qu'à l'épaississant, est ajouté en plus un silicate stratifié activé expansable, de préférence de la bentonite, de montmorillonite, de l'illite, de la vermiculite, et/ou de la smectite, la quantité de silicate stratifié se montant jusqu'à 25 % en poids par rapport au poids total du mélange d'enduction.

7. Epaississant suivant l'une des revendications précédentes, caractérisé en ce qu'à l'épaississant, est

ajouté en plus un complexe chélaté, de préférence du chélate de titane et/ou du chélate de zirconium, la quantité du complexe chélaté se montant jusqu'à 10 % en poids par rapport au poids total du mélange d'enduction.

8. Epaississant suivant l'une des revendications 1 à 7, caractérisé en ce que l'épaississant est ajouté au mélange d'enduction comme produit de transformation prêt.

9. Epaississant suivant l'une des revendications 1 à 7, caractérisé en ce que l'épaississant est formé in situ, les partenaires réactionnels individuels étant ajoutés l'un après l'autre au mélange d'enduction.

10. Utilisation de l'épaississant suivant l'une des revendications précédentes pour la thixotropie du mélange d'enduction, dont le liant est une dispersion de résine plastique dans l'eau, une résine plastique soluble dans l'eau et/ou une émulsion de résine plastique du type huile/eau ou eau/huile imprégnée le cas échéant de solvant.